Europäisches Patentamt

European Patent Office

Office européen des brevets

(19)

(11) Veröffentlichungsnummer : **0 162 045**
**B1**

(12)                    EUROPÄISCHE PATENTSCHRIFT

(45) Veröffentlichungstag der Patentschrift :
05.04.89

(21) Anmeldenummer : 84900506.1

(22) Anmeldetag : 19.01.84

(86) Internationale Anmeldenummer :
PCT/EP 84/00014

(87) Internationale Veröffentlichungsnummer :
WO/8402874 (02.08.84 Gazette 84/18)

(51) Int. Cl.⁴ : **B 29 C 49/04**

(54) VERFAHREN ZUM REGELN DER WANDSTÄRKE VON HOHLSTRANGFÖRMIGEN VORFORMLINGEN.

(30) Priorität : 22.01.83 DE 3302020

(43) Veröffentlichungstag der Anmeldung :
27.11.85 Patentblatt 85/48

(45) Bekanntmachung des Hinweises auf die Patenterteilung : 05.04.89 Patentblatt 89/14

(84) Benannte Vertragsstaaten :
AT BE CH DE FR GB LI LU NL SE

(56) Entgegenhaltungen :
EP--A-- 0 058 297
DE--A-- 1 704 467
DE--A-- 1 900 532
DE--A-- 1 934 284
US--A-- 3 795 719

(73) Patentinhaber : FEUERHERM, Harald
Alfred-Delp-Str.1
D-5210 Troisdorf (DE)

(72) Erfinder : FEUERHERM, Harald
Alfred-Delp-Str.1
D-5210 Troisdorf (DE)

(74) Vertreter : Köhne, Friedrich, Dipl.-Ing.
Postfach 250265 Lothringer Strasse 81
D-5000 Köln 1 (DE)

**Beschreibung**

Technisches Gebiet

Die Erfindung bezieht sich auf ein Verfahren zum Regeln der Wanddicke von hohlstrangförmigen Vorformlingen aus thermoplastischem Kunststoff nach einem vorgegebenen Programm, wobei die Lage der Vorformlinge zu der Blasform durch einen Meßgeber, vorzugsweise eine Fotozelle, kontrolliert wird und wobei anschließend die Vorformlinge in einer Blasform durch Innendruck zu jeweils einem Hohlkörper aufgeweitet werden.

Stand der Technik

Zum Herstellen von Hohlkörpern aus thermoplastischem Kunststoff, beispielsweise Kanistern oder anderen Behältnissen, werden in der Praxis im wesentlichen zwei Arten von Maschinen eingesetzt. Die eine arbeitet mit einem kontinuierlich arbeitenden Extruder, dem ein Strangpreßkopf nachgeschaltet ist, an dessen unterem Ende ein hohlstrangförmiger Vorformling austritt. Bei der anderen Maschinenart ist ein Speicherkopf vorgesehen, aus dem mittels eines Massekolbens der in dem Speicherraum enthaltende Kunststoff zu jeweils einem hohlstrangförmigen Vorformling ausgepreßt wird. Da die herzustellenden Hohlkörper die unterschiedlichsten Formen aufweisen können, bei denen noch dazu bestimmte Wandungsbereiche erfahrungsgemäß in der Praxis besonders hohen mechanischen Beanspruchungen unterworfen sind, wird über die Länge des jeweiligen Vorformlings ein Wanddickenprogramm erstellt. Die Wanddickenprogrammierung wird zur Zeit mit Konventionellen Regelgeräten durchgeführt. Es gibt sowohl Geräte mit Wanddickenprogrammierung in Längsrichtung, als auch solche, die ein Beeinflussen der Wanddickenverteilung in Umfangsrichtung ermöglichen. Dazu wird z. B. im Strangpreßkopf oder im Speicherkopf der Durchflußkanalquerschnitt auf dem degamten Umfang oder stellenweise verändert, so daß sich ein Vorformling ergibt, der über seine Länge und ggfs. in Bereichen seines Umfanges unterschiedliche Wanddicken aufweist.

Bei der Erstellung der Programmkurve wird zunächst einmal berücksichtigt, daß sich der Vorformling über seine Länge unterschielich durchhängt, und zwar aufgrund des von unten nach oben größer werdenden Gewichtes. Aus diesem Grunde kann der Programmkurve eine sog. Rampe untergelegt werden, die vom Beginn der Vorformlingsstellung an den Austrittskanal bzw. die Düsenstellung kontinuierlich vergrößert, so daß das Durchhängen über die Länge des Vorformlings kompensiert wird. Des weiteren wird ein bestimmter gleichmäßiger Sicherheitsspalt sowie ein gleichmäßiger Grundspalt vorgesehen, so daß die eigentliche Programmkurve von der Rampe, dem Sicherheitsspalt und dem Grundspalt überlagert wird. Man hat bereits erkannt, daß es wichtig ist, ein sicheres Einhalten der Wanddickenverteilung des Vorformlings zu erreichen. Das Messen der Wanddickenverteilung ist aber zur Zeit ein technisch noch nicht gelöstes Problem. Man versucht daher, die Wanddickenverteilung über das Gewicht des betreffenden Artikels konstant zu halten, indem Abweichungen vom vorgegebenen Gewichtssoll so verarbeitet werden, daß das Gewicht des Vorformlings entsprechend beeinflußt wird. Man hat dies versucht durch Änderung des Grundspaltes. Dadurch verändern sich jedoch die Proportionen der Wanddickenprogrammierung, denn eine Veränderung des Grundspaltes wirkt sich relativ stärker auf eine Dünnstelle als auf eine Dickstelle des Vorformlings aus. Man ist daher dazu übergegangen, die Länge des Vorformlings direkt als Bezugsgröße für die Wanddickenprogrammierung einzusetzen. Hierbei wird dei Lage des unteren Vorformlingsendes mit Hilfe einer Fotodioden-Kamera erfaßt. Auch dies hat zu keinem befriedigenden Ergebnis geführt, denn ein Konstanthalten der Vorformlinglänge führt noch nicht zu einer exakten Wanddickenprogrammierung. Ursache für die Abweichungen der Vorformlingslänge vom Sollwert sind die Änderungen der Rohstoffeigenschaften, des Mischungsverhältnisses von Neumaterial und Regenerat, Zuschläge an Farben und sonstigen Einmischungen, Änderung der Massetemperatur, der Schneckendrehzahl usw. Es nützt also wenig, wenn heutige Regelgeräte die Vorformlingslänge an einer bestimmten Stelle erfassen, aus der Zeit von einem Startimpuls bis zum Erreichen der Meßposition ein Signal zur Beeinflussung der Schneckendrehzahl oder des Grundspaltes usw. bilden.

Zum oben erläuterten Stand der Technik wird auf die Zeitschrift « Kunststoffe » 72 (1982) 5, Seiten 251 bis 255, und auf « VDI-Kunststofftechnik » ISBN 3-18-404088-7, Seiten 171 bis 182 hingewiesen.

Zusammenfassend zu diesem Stand der Technik sei noch folgendes gesagt. Wie erläutert, erfassen die heutigen Regelgeräte die Vorformlingslänge an einer Stelle, bilden aus der Zeit oder dem Weg von eihem Startimpuls bis zum Erreichen der Meßposition ein Signal zur Beeinflussung der Schneckendrehzahl oder des Grundspaltes. Die Regelgeräte beschränken sich auf die Positionsregelung der Düse bzw. Düsenkombination. Da eine Veränderung des Grundspaltes sich stärker auf eine Dünnstelle als auf eine Dickestelle des Vorformlings auswirkt, verändern sich die Proportionen der Wanddickenprogrammierung. Günstiger ist es, über die Gewichtsabweichung die Addition aus Grundspalt und Profilwert zu beeinflussen. Hierbei wird dann aber immer der Sicherheitsspalt vergessen. Im diesem Zusammenhang wurde auch schon vorgeschlagen, das Gewicht in einem bestimmten Verhältnis von Programmwahl und Grundspalt zur Regelung zu verwenden.

Eine konstante Vorformlingslänge und ein konstantes Gewicht des Vorformlings garantieren jedoch noch keine gleiche Lage der jeweiligen Wanddickenpunkte des Vorformlings an die richtigen Stellen in der Blasform. Die Umstellung auf ein anderes Gewicht ist zwar theoretisch sehr schnell durch Einstellen sämtlicher schon einmal ermittelter Werte möglich, jedoch praktisch erst nach Erreichen der mechanischen Werte abgeschlossen. In der Praxis vergehen darüber Stunden. Die Optimierung eines Hohlkörpers auf die mechanischen Werte, z. B. Stauchwert, Fallfestigkeit, Mindestwanddicke usw. dauert mit den herkömmlichen Einrichtungen zu lange und ist letztlich nicht genau zu erreichen.

Unterschiedliche Viskositäten und Temperaturen des thermoplastischen Kunststoffes führen zu unterschiedlicher Auslängung und unterschiedlichem Schwellverhalten des Vorformlings und jede Eigenschaft für sich zu einem unterschiedlichen Ausrecken. Die Folge ist eine Verschiebung der Lage der Wanddickenpunkte des Vorformlings zu der gewünschten Lage im fertigen Hohlkörper bzw. zur gewünschten Lage in der Blasform.

Aus dem Dokument US-A-3 795 719 ist ein Stand der Technik bekannt, bei dem es im wesentlichen darum geht, die Schnecke des Extruders und den Kern der Vorrichtung in bezug auf den Querschnitt des Düsenaustritts der Vorrichtung so zu steuern, daß der Vorformling konstante oder variable Wandquerschnitte erhält. Die Steuerung erfolgt über eine Reihe Fotozellen, die nacheinander von dem unteren Ende des ausgestoßenen Vorformlings und damit in Abhängigkeit von der Länge des Vorformlings angesprochen werden. Die Ausstoßmenge und die Länge der Vorformlinge sollen dabei konstant gehalten werden, um möglichst Abfallmaterial zu vermeiden.

Aufgabe

Demgegenüber liegt der Erfindung die Aufgabe zugrunde, ein Verfahren zu schaffen, durch welches eine gleichbleibende Qualität der herzustellenden Hohlkörper und gleichzeitig eine Einsparung an thermoplastischem Material erreicht wird.

Lösung

Die gestellte Aufgabe wird erfindungsgemäß dadurch gelöst, daß mindestens ein vorbestimmter Querschnittsbereich, vorzugsweise ein kritischer Bereich, des jeweiligen Vorformlings mit einer oder mehreren Markierungen versehen und/oder die Wanddicke dieses Querschnittsbereichs gemessen wird, und daß die Lage des Vorformlings zu der Blasform in Abhängigkeit von der Messung der Markierungen durch den Meßgeber oder durch die Wanddickenmessung ohne Rücksicht auf die Gesamtlänge des Vorformlings so geregelt wird, daß der genannte Querschnittsbereich nach dem Aufweiten an die richtige Stelle der Blasform gelangt.

Vorteilhafte Wirkungen

Der Erfindung liegt die Erkenntnis zugrunde, daß es bei der Herstellung von Hohlkörpern wesentlich darauf ankommt, daß die Teile des Vorformlings, die insbesondere für die kritischen Bereiche des Hohlkörpers nach dem Programm vorgesehen sind, auch tatsächlich an die richtige Stelle innerhalb des Hohlkörpers bzw. an die richtige Stelle der Blasform gelangen. Zum Beispiel können Kanister gegenüber dem Stand der Technik noch mit einem viel geringeren Einsatzgewicht an thermoplastischem Kunststoff produziert werden, wenn der Stauchwert annähernd konstant gehalten werden kann. Für einen hohen Stauchwert sind vorwiegend der Schalterradius und der Bodenradius mit seinen Übergängen am Kanister verantwortlich.

Vorteilhafte Ausgestaltungen des erfindungsgemäßen Verfahrens ergeben sich aus den Unteransprüchen. Diese Unteransprüche werden weiter unten näher erläutert.

Beschreibung der Zeichnungen

In der Zeichnung sind Ausführungsbeispiele der Erfindung schematisch dargestellt. Es zeigen
Fig. 1 eine schematische Darstellung einer hälftigen Kontur eines Kanisters und rechts daneben zugehörige Programmkurven,
Fig. 2 eine schematische Darstellung gemäß Fig. 1 jedoch zwei nebenstehenden Programmkurven in unterschiedlicher Stellung,

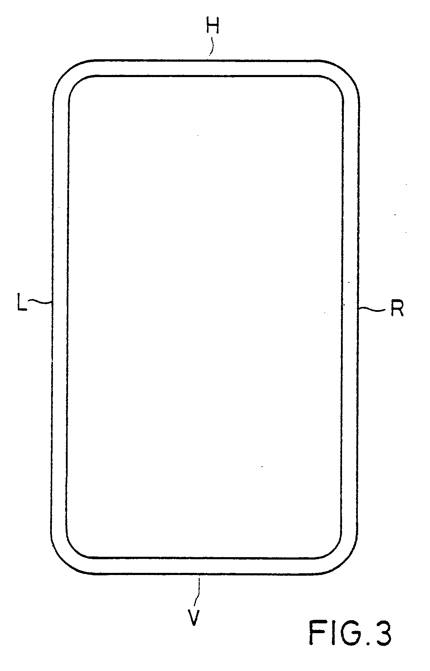

Fig. 3 einen Querschnitt durch ein Beispiel eines Kanisters,
Fig. 4 einen Längsschnitt durch eine Blasform in geöffneter Stellung mit unten geschlossenem Vorformling und dem Austrittsende eines Düsenkopfes mit einer Druckluftzuführungsvorrichtung und
Fig. 5 eine Schemazeichnung zur Veranschaulichung von Regel- bzw. Steuerungsmaßnahmen.

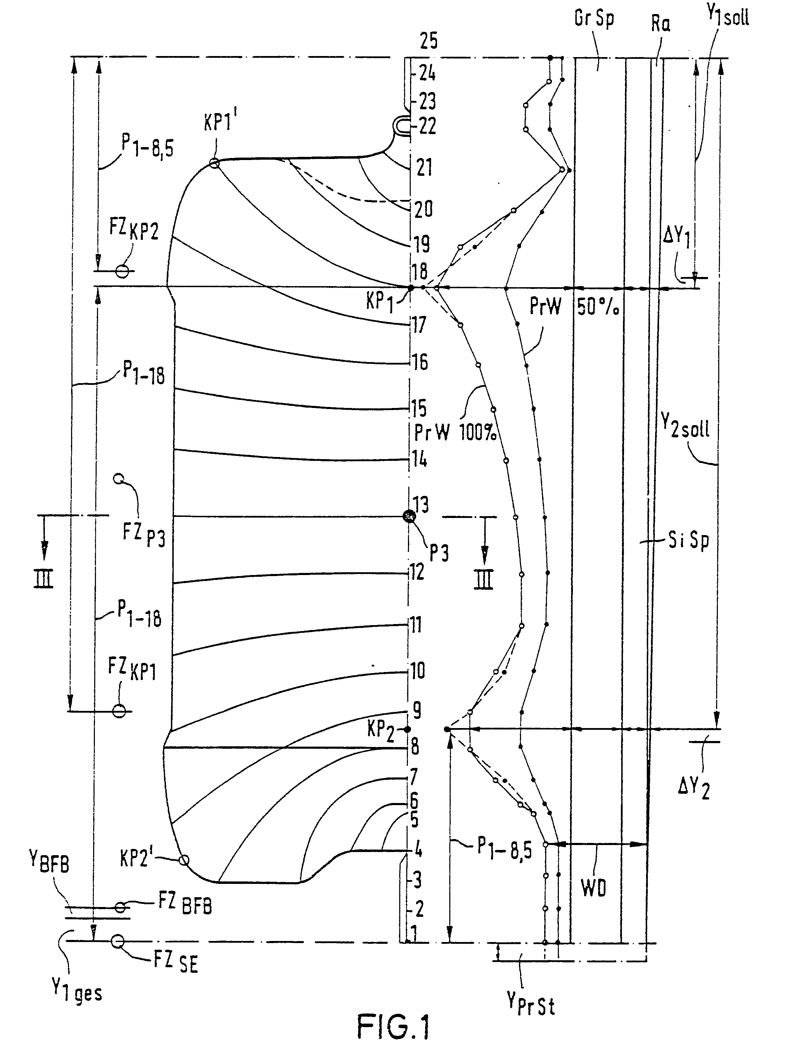

In Figur 1 der Zeichnung ist schematisch eine Symmetriehälfte über einem Programm dargestellt, nach welchem die Wandungsdicken des Vorformlings bestimmt werden. Die Wandungsdicke des Vorformlings ergibt sich aus der Rampe, dem Sicherheitsspalt, dem Grundspalt und dem eingestellten Wanddickenprogramm. Beim vorliegenden Ausführungsbeispiel beträgt die eingestellte Programmwahl 50 % von der darüber gezeigten Kurve der 100 %igen Programmwahl.

Es sei im vorliegenden Ausführungsbeispiel davon ausgegangen, daß der kritische Punkt in der Kanisterkontur an einer Stelle KP1 in der Schulter des Kanisters liegt. Für diese Stelle ist unter Bezugszeichen 18 nach dem Programm auch die größte Wandstärke im Vorformling vorgesehen. Da das Ausrecken des Kunststoffes nach Recklinien erfolgt, wie sie beispielsweise in der Zeichnung eingezeichnet sind, kommt es wesentlich darauf an, daß der Kunststoff aus dem Wanddickenpunkt 18 zu der Stelle KP1 im Kanister gelangt. Zu diesem Zweck wird die Lage jedes Vorformlings zu der Blasform in Abhängigkeit von mindestens einem vorbestimmten Querschnittsbereich des Vorformlings, im vorliegenden Falle entsprechend Wanddickenpunkt 18, also vorzugsweise einem kritischen Bereich, gesteuert.

Vorteilhafterweise kann man einen Meßgeber, z. B. eine Fotozelle $FZ_{KP1}$ mit Abstand unterhalb der Zuführungsstelle des Vorformlings vorsehen, und zwar mit dem Abstand P1-18. In dem Augenblick, in dem das untere Ende des Vorformlings im Niveau des Meßgebers ankommt, wird die Länge des Vorformlings mit dem vorgegebenen Programm in einem Wandstärkenprogrammierer verglichen und der noch auszustoßende Anteil des Vorformlings so bemessen bzw. verändert, daß der Querschnittsbereich, im vorliegenden Fall, nach Wanddickenpunkt 18, in die richtige Lage zur Blasform bzw. an die richtige Stelle im Kanister bei KP1 gelangt.

Statt des Wanddickenpunktes 18 kann auch ein Wanddickenpunkt KP2 des Programms gewählt werden, der zwischen den Wanddickenpunkten 8 und 9 liegt, so daß entsprechend sichergestellt wird, daß das Kunststoffmaterial entsprechend den Punkten des Programms genau an die Stelle KP2 der Kanisterkontur gelangt. Zur entsprechenden Steuerung kann ein Meßgeber, z. B. eine Fotozelle $FZ_{KP2}$, mit Abstand P1-8,5 angeordnet werden. Die beiden Lagensteuerungen können auch miteinander kombiniert werden, wobei dem jeweils kritischsten Punkt bzw. Bereich steuerungsmäßig der Vorrang eingeräumt wird.

Zum besseren Verständnis der Erfindung soll das nachfolgende Beispiel erläutert werden, und zwar sei angenommen, daß ein Umstellen des Einsatzgewichtes erfolgen soll. Zum Beispiel kann das Einsatzgewicht des Kanisters, dessen Kontur in Figur 1 mit der linken Kurve hälftig dargestellt ist, von beispielsweise 420 g auf 340 g umgestellt werden, und zwar bei der kontinuierlichen Herstellung der Vorformlinge. Ferner sei angenommen, daß die Fotozelle FZkp1 bereits eingerichtet ist. Das Einsatzgewicht wird durch das Verhältnis zwischen Grundspalt GrSp, Programmwahl PrW und ggfs. der Rampe Ra bestimmt. Zur Veränderung des Einsatzgewichtes ergibt sich ein neues Verhältnis von Grundspalt, Programmwahl und ggfs. Rampe. Dadurch ergibt sich beispielsweise für die Differenz der Abstände y2 und y1, also für y2 — y1 gemäß Figur 1 jeweils eine Verschiebung Δy1 und Δy2. Wäre weder eine Schlauchlängensteuerung noch eine Lagensteuerung vorhanden, müßten die durch diese Verschiebungen eingetretenen Fehler in den Kontrollpunkten KP1 und KP2 durch Korrekturen der Schlauchlänge und/oder des Wanddickenprogramms erfolgen, um beide Kontrollpunkte in die richtige Lage zur Blasform zu bekommen. In der Praxis wird dabei so verfahren, daß dem Boden- und dem Schulterradius des Kanisters mindestens je zwei Wanddickenpunkte des Programms zugeordnet werden, damit bei den in der Produktion auftretenden Schwankungen noch ausreichend Material vorhanden ist.

Die in Figur 1 dargestellte Programmkurve mit 100 % Programmwahl zeigt in der durchgezogenen Linie eine Kurve, mit der beim Stand der Technik nur mit viel Aufwand über längere Zeit produziert werden kann. Die gestrichelte Kurve ergibt den gleichen Materialeinsatz, jedoch ganz erheblich höhere mechanische Werte, d. h. daß bei gleichen mechanischen Werten ein erheblich niedrigeres Gewicht erforderlich ist. Dazu ist es angebracht, die Lage der extrem gesteckten Kurve auch zur Blasform konstant zu halten.

Nach dem Stand der Technik sind Schlauchlängenregelungen bekannt, beispielsweise aus der DE-OS 29 40 904, wobei durch eine Lichtschranke, vorwiegend eine Fotozelle, welche soweit wie möglich am Ende des Vorformlings angeordnet ist, eine möglichst konstante Vorformlingslänge geregelt werden soll.

Nach der Erfindung erfolgt die Regelung nicht von einem beliebigen Querschnitt aus, sondern vorzugsweise von einem Kontrollpunkt, im beschriebenen Beispiel von dem Kontrollpunkt KP1. Selbstverständlich ist es auch bei der Erfindung möglich, wenn nur von einem Kontrollpunkt bzw. Querschnitt ausgehend geregelt wird, die Fotozelle soweit wie möglich am Ende des Vorformlings zu montieren, um die Vorformlingslänge so konstant wie möglich zu halten. Die Fotozelle am Kontrollpunkt KP1 müßte jedoch für die Bestimmung der Lage zusätzlich vorhanden sein. Auch mit einer Schlauchlängenregelung kann die Lage der Wanddickenpunkte noch nicht bestimmt werden. Zur genauen Lagesteuerung zum Ausgleich der unvermeidbaren Störgrößen gibt es bisher weder ein Steuerungsnoch ein Regelungskonzept.

Nach der Erfindung wird deshalb durch den Vergleich der Meßdaten der Fotozelle $FZ_{KP}$ der noch auszustoßende Anteil des Vorformlings festgelegt. Dieser Anteil bzw. die Restausstoßlänge kann z. B. wie folgt konstant gehalten werden. Einmal kann der Startimpuls für das nächste Wanddickenprogramm entsprechend früher oder später erfolgen. Zum anderen kann bei Einleitung der Formbewegung über das ablaufende Wanddickenprogramm diese Einleitung um den ermittelten Fehler korrigiert werden. Ferner kann der ermittelte Fehler durch eine Relativbewegung zwischen der Blasform und dem Vorformling ausgeglichen werden. Mit anderen Worten kann man die Blasform oder die Ausstoßdüse des Extruders, aus dem der Schlauch des Vorformlings austritt, oder beim Transport des Vorformlings den Greifer in der Höhe verschieben.

Eine vorteilhafte Ausgestaltung des erfindungsgemäßen Verfahrens ergibt sich dadurch, daß mittels des Meßgebers die Länge des Vorformlings bis zu dem vorerläuterten Kontrollpunkt bzw. dem vorbestimmten Querschnittsbereich mit dem vorgegebenen Programm in einem Wanddickenprogrammierer verglichen und der noch auszustoßende Anteil des Vorformlings so bemessen bzw. verändert wird, daß der Querschnittsbereich in die richtige Lage zur Blasform gelangt. Aus dem Vergleich des jeweils abgelaufenen Wanddickenprogramms mit der Fotozelle am Kontrollpunkt KP1 kann der voraussichtliche Fehler errechnet und daraus die Restausstoßlänge festgelegt werden.

Bei dem in Figur 1 dargestellten Beispiel des Wanddickenprogramms ergibt sich der Volumenanteil je Abschnitt zwischen zwei benachbarten Wanddickenpunkten wie folgt : Gesamtgewicht des Vorformlings : Anzahl der Abschnitte zwischen den Wanddickenpunkten. Da bei diesem Beispiel 25 Wanddickenpunkte gewählt sind, ergeben sich 24 Abschnitte. Bei einem Gesamtgewicht von 504 g beträgt der Gewichtsanteil je Abschnitt 504 g : 24 = 21 g. Da das Schwellverhalten des Vorformlings von der Spaltweite der Düse abhängig ist, ist dieser Wert nur ein Richtwert, wobei gleiches Schwellverhalten unterstellt ist. In einen Mikroprozessor des Programmierers kann aber der Schwellwert und andere Verzerrungseffekte mit einprogrammiert werden. Bei einem Wanddickenpunkt mit großer Wanddicke, z. B. bei dem Wanddickenpunkt 18, ergibt sich folglich für diesen Punkt, genauer gesagt für den zu diesem Punkt gehörigen Abschnitt, eine erheblich kleinere Vorformlingslänge als z. B. an dem Abschnitt zu dem Wanddickenpunkt 25, wo eine geringere Wanddicke vorhanden ist. Dies muß in der Berechnung der Restausstoßlänge und des voraussichtlichen Fehlers mit berücksichtigt werden. Dazu werden Wanddickenpunktanteile ermittelt und die erforderliche Korrektur kann ebenfalls wieder zu diesen Wanddickenpunktanteilen bzw. -abschnitten ermittelt und ausgeführt werden.

Eine für die Praxis wichtige Ausgestaltung des erfindungsgemäßen Verfahrens besteht darin, daß zwei oder mehrere kritische Bereiche nach dem Programm ausgewählt und deren Lage mittels einer entsprechenden Anzahl von Meßgebern, vorzugsweise Fotozellen, kontrolliert und/oder gesteuert und/oder geregelt werden. Hierzu seien noch folgende Erläuterungen angeschlossen. Durch eine zweite Fotozelle, z. B. am Punkt KP2, entsprechend dem Wanddickenpunkt 8, 5, kann eine Schlauchlängenregelung wie folgt arbeiten. Zunächst wird die Lage des Punktes KP1 konstant gesteuert. Daraus ergibt sich für den Punkt KP2 bzw. für den Abstand y2-y1 eine Vergrößerung von $\Delta y1 + \Delta y2$. Durch Vergleich an den Fotozellen $FZ_{KP1}$ und $FZ_{KP2}$ kann nun über die Schneckendrehzahl des Extruders der Abstand y2-y1 auf den Sollwert geregelt werden. Die sich daraus ergebende Veränderung des Gewichtes des Vorformlings kann mit anderen Maßnahmen korrigiert werden, zumal die Lage der Wanddickenpunkte zur Blasform nach den Erkenntnissen der Erfindung wichtiger als das Gewicht ist. Damit wird die Gesamtschlauchlänge bzw. die gesamte Länge des Vorformlings kürzer. Durch diese Verkürzung würde bei normalem Ablauf des Wanddickenprogramms bei dem Wanddickenpunkt 25 ein $y1 \cong y1soll — (\Delta y1 + \Delta y2) : 2$ und ein $y2 \cong y2soll — (\Delta y2 + \Delta y1) : 2$ vorhanden sein. Zur Erfüllung der Forderung Wanddickenpunkt 18 = KP1 muß folglich das Wanddickenprogramm um ungefähr $(\Delta y1 + \Delta y2) : 2$ verlängert oder eine andere vorstehend beschriebene Maßnahme für die Längensteuerung durchgeführt werden. Der Fehler bzw. die Abweichung kann vorteilhafterweise wieder in Anteilen bzw. Abschnitten, die zu den Wanddickenpunkten zugehören, ermittelt und korrigiert werden. Da die Abweichungen durch den oben erläuterten Vergleich an den Wanddickenpunkten mit der maximalen Wanddicke festgestellt werden, würden sich Fehlmessungen an der Unterkante des Vorformlings z. B. durch Schwankungen aus Erschütterungen, unsauberem Schnitt usw. prozentual stärker bemerkbar machen, als an den Wanddickenpunkten mit minimaler Wanddicke. Durch eine fächerartige Lichtschranke, z. B. mehrere Fotozellen in einer Ebene auf dem Umfang verteilt, kann dieser Fehler sehr herausgesetzt werden. Wenn jedoch nur zwei Kontrollpunkte für die Herstellung eines Hohlkörpers erforderlich sind, z. B. die Punkte KP1 und KP2 gemäß Figur 1, und wenn die Steuerung so aufgebaut ist, wie vorstehend beschrieben, ist ein konstanter Abstand zwischen den beiden gewählten Wanddickenpunkten durch die Schlauchlängenregelung auch dadurch zu erreichen, daß der Meßgeber für diese Schlauchlängenregelung im Bereich geringer Wanddicke entsprechend großer Schlauchlänge pro Punkt bzw. dem zugehörigen Abschnitt zusätzlich möglichst weit am Schlauchende angeordnet ist und die Fotozellen $FZ_{KP1}$ und $FZ_{KP2}$ nur als Kontrollpunkte eingerichtet werden. Die Schlauchlängenregelung wird somit zur Erzielung eines konstanten Abstandes zwischen den gewählten Punkten eingesetzt, d. h. daß bei der laufenden Kontrolle z. B. eine Abweichung in der gleichen Richtung vorhanden sein kann. Wie aus Figur 1 zu ersehen ist, besitzt die Steuerkurve, die aufgrund der Erfindung programmiert werden kann, zu beiden Seiten der Punkte KP1 und KP2 besonders starke Steigungen. Sollten diese Steigungen der Kurven unmittelbar an den genannten Punkten einmal in Flußrichtung und einmal entgegen der Flußrichtung im Vergleich erheblich voneinander abweichen, ist der dadurch entstehende Fehler ebenfalls zu berücksichtigen und, wie oben beschrieben, durch Regelung auszugleichen.

Eine weitere vorteilhafte Ausgestaltung des erfindungsgemäßen Verfahrens ergibt sich durch die Lehre, daß der noch auszustoßende Anteil des Vorformlings bei jedem Vorformling konstant gehalten wird. Dies sei nachfolgend näher erläutert. Es ist bekannt, die Schließbewegung der Blasformteile durch ein Signal, welches vom Vorformling beim Durchlaufen einer Fotozelle entsteht, einzuleiten. Beim Stand der Technik ist dies die Fotozelle $FZ_{SE}$, die entsprechend dem Punkt 1 der Programmskala 1 bis 25 angeordnet ist. Bei der Erfindung wird eine Fotozelle für die Blasformbewegung $FZ_{SEB}$ um den maximal zulässigen Fehler, z. B. um 5 % gegenüber dem Stand der Technik, höher gesetzt. Dies ist eine Maßnahme, auf die weiter unter noch näher eingegangen wird.

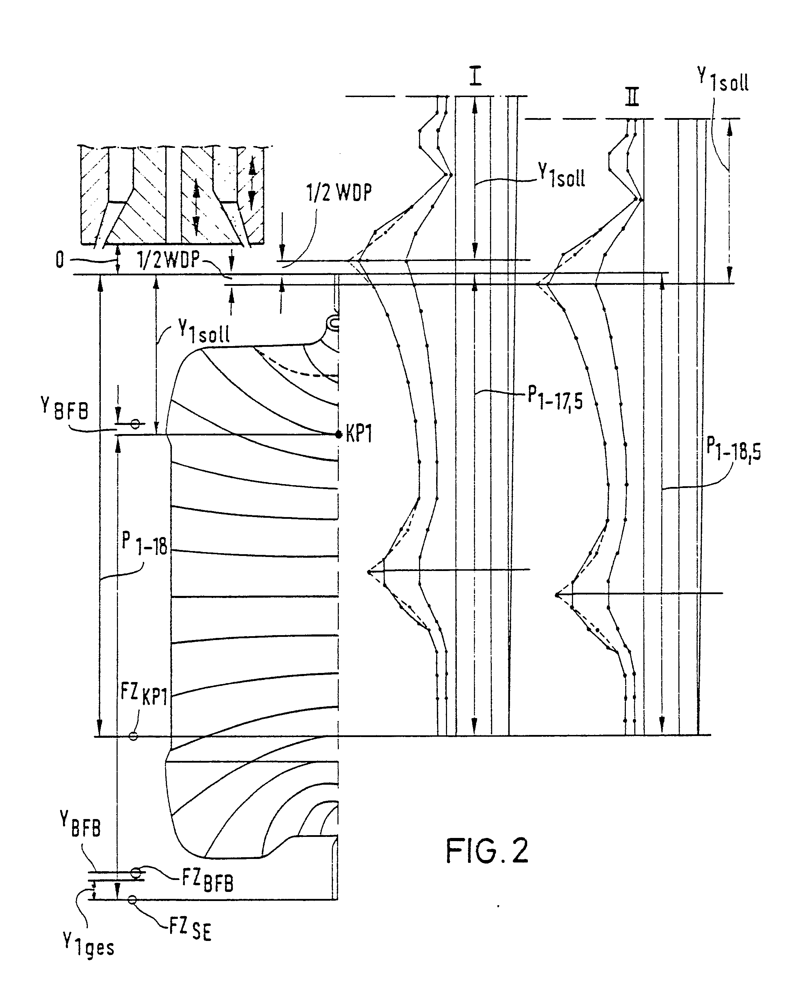

Ein weiterer wesentlicher Gesichtspunkt in diesem Zusammenhang sei anhand der Figur 2 erläutert. Die Figur 2 basiert auf der Figur 1, jedoch sind hier zur Veranschaulichung zwei Programmkurven entsprechend Figur 1 nebeneinander gezeichnet, jedoch in unterschiedlichen Stellungen zu der Kontur des herzustellenden Kanisters, wobei angenommen wird, daß zu beiden gezeichneten Programmkurven der Vorformling mit seinem äußeren Ende die Fotozelle $FZ_{KP1}$ erreicht hat. Die in Figur 2 eingezeichnete linke Programmkurve soll veranschaulichen, daß das bis dahin abgelaufene Programm im Vergleich zu dem theoretisch richtigen Ablauf des Programms nachgelaufen ist, während die rechte eingezeichnete Programmkurve vorgelaufen ist, so daß in dieser Stellung in beiden Fällen durch Korrekturmaßnahmen die richtige Lage gesteuert bzw. geregelt werden kann. Im Bild der Figur 2 oben links ist noch ein Schnitt durch das Düsenaustrittsende dargestellt, wobei der innere Kern und der äußere Mantel in Richtung der eingezeichneten Pfeile verstellbar sind, und zwar sowohl relativ zueinander, als auch beide zusammen.

In diesem Zusammenhang sei noch folgendes erläutert. Der Startimpuls für den nächsten Programmablauf erfolgt beim Stand der Technik bei einem Speicherkopfbetrieb mit dem Ausstoßbeginn des Vorformlings und bei der kontinuierlichen Vorformlings-Herstellung mit dem Abtrennen des Vorformlings. Der Abstand zwischen Düsenunterkante und Abschneider (Figur 2) ist von verschiedenen Gegebenheiten abhängig und dadurch der Beginn des Wanddickenprogramms verschieden bzw. unterschiedlich. Um für einen möglichst kleinen Fehler die Restausstoßlänge des Vorformlings möglichst klein zu halten, könnte der Startimpuls für das nächste Wanddickenprogramm entsprechend von einem anderen geeigneten Signal aus der Blasmaschine erfolgen. In allen Figuren ist die Lage der Wanddickenpunkte 1 bis 25 wie beim Speicherkopfbetrieb gezeichnet.

Der Vorformling entsprechend der oberen Programmkurve I in Figur 2 würde, wenn die Vorformlingsgeschwindigkeit unverändert bliebe, folgende Differenz y am Kontrollpunkt KP1 aufweisen. Diese Differenz in gezeichneter Lage beträgt einen halben negativen Abschnitt zu dem Wanddickenpunkt. Dabei hat der ausgestoßene Sollanteil ein Volumen von 17 : 24 des gesamten Vorformlingsvolumens. Der Schwellwert und anderen Verzerrungseffekte als Funktion der Düsenaustrittsspaltweite und der Vorformlingslänge wurde für diese Berechnung wieder gleichgesetzt. Der noch auszustoßende Sollanteil hat ein Volumen von 7 : 24 des gesamten Vorformling-Volumens. Die voraussichtliche Gesamtdifferenz beträgt $y_{1ges} = 0,5 \times 24 : 17 = 0,706$. Um die Differenz $y_{1ges} = 0,706$ eines Punktabschnittes würde folglich der effektive Wanddickenpunkt 18 tiefer als der Sollwert in der Blasform liegen, wenn keine Korrektur erfolgen würde. Bei dem Vorformling nach der unteren Programmkurve II in Figur 2 würde der effektive Wanddickenpunkt 18 höher als der Sollwert in der Blasform liegen.

Die Vergleiche und Berechnungen sollen beim Wanddickenpunkt 18 bzw. 8,5 vorgenommen werden, da keine Festlegung für die elektronische Schaltung erfolgen soll, d. h. die Erfindung ist genauso anwendbar, ob der Vergleich der Fotozelle $FZ_{KP1}$ zum Wanddickenprogramm erfolgt oder die Differenz der Fotozelle $FZ_{KP1}$ zum z. B. nächsten Wanddickenprogramm ermittelt wird. Durch den Vergleich mit dem theoretischen Programm kann der momentane Fehler gespeichert werden, d. h. daß die Restausstoßlänge um den erkannten Fehler korrigiert werden soll. Die Einleitung der Korrektur erfolgt jedoch erst frühestens nach Erreichen der Fotozelle $FZ_{BFB}$.

Wenn man einmal voraussetzt, daß für die Einleitung der Blasformbewegung bis zum Erfassen des Vorformlings ungefähr ein Viertel des Abschnitts zu dem zugehörigen Wanddickenpunkt benötigt wird und der maximale zu korrigierende Fehler beträgt 0,7 des Abschnitts des Wanddickenpunktes, so könnte die Fotozelle $FZ_{BFB}$ um den Abschnitt eines Wanddickenpunktes vor dem mittleren Vorformlingsende angebracht sein. Größere Fehler als vorstehend angegeben werden als betriebsunwirkliche Zustände nicht korrigiert und die Hohlkörper ausgeworfen.

Der Abstand zwischen den Fotozelle $FZ_{KP1}$ und der Fotozelle $FZ_{BFB}$ entspricht folglich den Abschnitten von sechs Wanddickenpunkten. Durch einen nochmaligen Vergleich nach Durchlauf dieser Abschnitte der sechs Wanddickenpunkte kann eine Überprüfung des Fehlers vorgenommen und damit die Restausstoßlänge sehr genau bemessen und die entsprechende Maßnahme eingeleitet werden.

Bei dem Vorformling entsprechend der Programmkurve I in Figur 2 war, wie angenommen, der gemessene Fehler — 1/2 des Abschnittes des Wanddickenpunktes. Die erforderliche Restausstoßlänge ist somit $y_{1sol}$ + 1/2 Wanddickenpunkt-Abschnitt. Es sei hier darauf hingewiesen, daß die Maßnahmen nach dem oben erläuterten Vergleich von Fotozelle $FZ_{KP1}$ und dem Wanddickenprogramm darauf abgestimmt sind, die Restausstoßlänge so genau wie wirtschaftlich vertretbar konstant zu halten. In diesem Beispiel wurde also eine Differenz von — 1/2 Wanddickenpunkt-Abschnitt an der Fotozelle $FZ_{KP1}$ festgestellt und folglich aufgrund dieser Differenz der voraussichtliche Fehler berechnet. Wird eine gleiche Schlauchausstoßgeschwindigkeit für die Restausstoßlänge von $y_{1sol} = 1/2$ WDP (Wanddickenpunkt-Abschnitt) unterstellt, so ergibt sich der Fehler $\Delta y1 = 0,5 \times 24 : 16,5 = 0,72$. Wenn durch den Vergleich an der Fotozelle $FZ_{BFB}$ der voraussichtliche Fehler bestätigt wird, so erfolgt die Erfassung des Vorformlings von der Blasform in diesem Beispiel um diesen Fehler später.

Ist z. B. die Differenz zwischen KP1 und KP2 ganz besonders wichtig, könnten mehrere Fotozellen zur laufenden Geschwindigkeitskontrolle angeordnet sein, die zum Ziel haben, über die Schlauchlängenregelung den Abstand y2-y1 schon für den laufenden Vorformling konstant zu halten. Diese Fotozelle $FZ_{x}$ müßte zwischen den Fotozellen $FZ_{KP1}$ und $FZ_{KP2}$ angeordnet sein. Durch einen Geschwindigkeitsvergleich zum Sollwert der Geschwindigkeit zwischen den Fotozellen $FZ_{ZD}$ und $FZ_{D}$ könnte der laufende Vorformling durch eine Schneckendrehzahländerung so beeinflußt werden, daß die Konstanthaltung des Abstandes y2-y1 auch für den laufenden Vorformling gewährleistet ist.

Zusätzlich wird der Punkt KP1 durch die Lagesteuerung in die richtige Position zur Blasform gebracht. Für den voraussichtlichen Fehler ist eine eventuell notwendige Geschwindigkeitsänderung zu berücksichtigen. Zwar ist es nach dem Stand der Technik in der Dissertation DS 8008 der IKV-Aachen (Mikrorechner-Einsatz zur Prozeßführung bei Extrusionsblasformen) bekannt, die Vorformlingsgeschwindigkeit zu regeln, jedoch mit dem Ziel, die Vorformlingslänge konstant zu halten. Da die Vorformlingslänge kein Maß für die Lage der Wanddickenpunkte zur Blasform ist, wird noch nicht einmal die Hauptforderung erreicht, den Punkt KP1 an die richtige Stelle zur Blasform zu bringen.

Eine weitere vorteilhafte Ausgestaltung des erfindungsgemäßen Verfahrens wird dadurch erreicht, daß die Wanddicke der fertigen Hohlkörper an einer oder mehreren Stellen gemessen wird und diese Messungen ggfs. zur Regelung der WD der nachfolgenden Vorformlinge verwendet werden. Mit anderen Worten erfolgt eine Kontrolle der Wanddicke eines Hohlkörpers z. B. eines Kanisters, und zwar mit der Möglichkeit, die wichtigsten Wanddickenpunkte über eindeutig definierte Maßnahmen zu beeinflussen. In diesem Zusammenhang ist es vorteilhaft, die Messung schon in der Blasform oder in einer sogenannten Maske, welche für die Hohlkörperentnahme bestimmt ist, vorzunehmen. In diesem Zusammenhang ist es ferner von Vorteil, daß den Regelmöglichkeiten eindeutige Regelgrößen zugeordnet werden, so daß die Konstanthaltung der gewünschten Größen gewährleistet ist.

Nach dem Stand der Technik, z. B. nach der DE-OS 2 940 418, ist es bekannt, das Einsatzgewicht des Vorformlings durch Änderungen der Schneckendrehzahl und des Grundspaltes konstant zu halten. Da nicht das Einsatzgewicht für einen hohen Stauchwert, sondern die Lage der Wanddickenpunkte dafür verantwortlich ist, die zur Gewichtsbestimmung erforderlichen elektronischen Waagen sehr teuer sind und einen nicht unerheblichen Platz in einer automatischen Fertigungsstraße in Anspruch nehmen, und das Ergebnis erst nach mehreren Zyklen vorliegt, ist diese Vorrichtung mit erheblichen Nachteilen belastet. Statt eine Gewichtskontrolle durchzuführen, ist es besser, eine Kontrolle der Wanddicke vorzunehmen. Durch z. B. die Messung der Wanddickenpunkte KP1 und KP1', KP2 und KP2', P3V, P3H, P3L und P3R ist das Blasteil bzw. der Hohlkörper, im vorliegenden Ausführungsbeispiel der Kanister, so gut wie bestimmt. Voraussetzung für gezielte Maßnahmen aufgrund der Wanddicken-Messungen ist der gewünschte Schlauchlauf bzw. die Erreichung der festgelegten Toleranzen zu den Wanddickenpunkten P3H, P3V, P3L und P3R. Wenn diese Wanddickenpunkte nicht in der Toleranz liegen, ist vorher eine normale Düsenverstellung, d. h. eine Schlauchlaufeinstellung, sinnvoll, die automatisch oder von Hand erfolgen kann. Eine automatische Düsenverstellung bei Verwendung der partiellen bzw. radialen Wanddickensteuerung, in der Fachsprache PWDS-System genannt, kann z. B. durch einen zusätzlichen servohydraulischen Stellantrieb, der etwa 90° zu den Stellantrieben des PWDS-Systems am Kragen der Düse angreift, verwirklicht werden, da bei dem PWDS-System auch Verschiebungen überlagert werden können.

Aus den folgenden Verhältnissen ergibt sich die Zuordnung der möglichen Maßnahmen :

1. Aus Verhältnis KP1 zu KP2 : Veränderung der Rampe der Rampe der axialen Wanddickensteuerung (WDS).

2. Aus Verhältnis KP1' zu KP2' : Verstellung der Rampe der partiellen bzw. radialen Wanddickensteuerung (PWDS).

3. Aus Verhältnis (P3V + P3H) zu (P3L + P3R) : Verstellung Grundspalt PWDS.

4. Aus Verhältnis KP1 zu KP1' bzw. KP2 zu KP2' : Änderung Programmwahl PWDS.

5. Aus Verhältnis P3V zu P2V bzw. P1V : Änderung der Programmwahl und/oder Grundspalt der axialen Wanddickensteuerung.

Durch diese eindeutige Zuordnung von Maßnahmen ist ein sogenanntes Totregeln wirkungsvoll ausgeschlossen. Ohnehin kann jede dieser Maßnahmen für sich und/oder in Kombination miteinander zu- oder abgeschaltet werden. Der Eingriff zur Regelung der Wanddicke in das Wanddickenprogramm wird nur vorgenommen, wenn der zum Vergleich vorgesehene Wanddickenpunkt in oder ungefähr in der Längentoleranz zu dem Meßpunkt liegt. Bei Abweichungen von der Längentoleranz wird der voraussichtliche Fehler, der durch nicht genaues Treffen auftritt, mitberücksichtigt.

In der laufenden Produktion treten Störungen meistens schleichend auf, d. h., daß das Ausregeln auch über einen längeren Zeitraum erfolgen kann. Die Hauptgründe für Abweichungen von den Sollwerten sind folgende Änderungen : Veränderung der Eigenschaften des Rohstoffes, des Mischungsverhältnisses von Neumaterial und Regenerat, der Massetemperatur, der Schneckendrehzahl und der Stützluft.

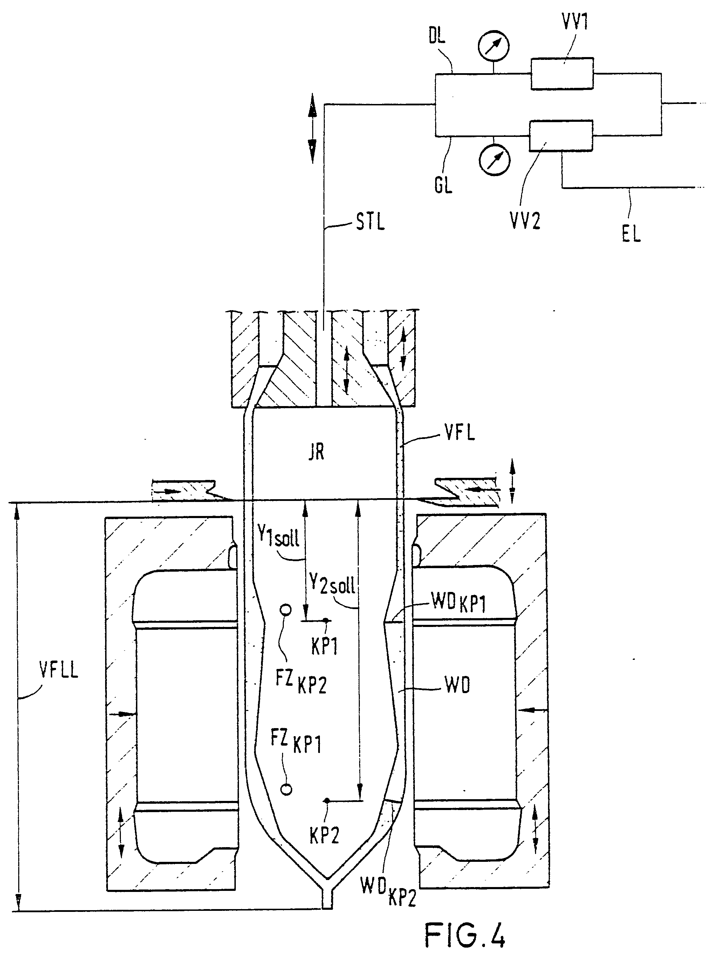

Wird z. B. ein am unteren Ende geschlossener Vorformling VFL, wie er in Figur 4 dargestellt ist, im Innenraum IR mit einem konstanten Stützluftdruck und einer konstanten Stützluftmenge gefüllt, der Widerstand des Vorformlings jedoch z. B. durch andere Eigenschaften des Rohstoffes oder anderer Massetemperaturen geringer, wird der Vorformling größer und vor allem die Vorformlingslänge VFLL länger. Durch die unterschiedliche Wanddicke WD des Vorformlings findet auch in der Länge eine unterschiedliche Reckung statt, die zu einer Verlagerung der effektiven Wanddicke im Vorformling führt. Die Reckung ist im Bereich der dickeren Wanddicke WDKP1 und WDKP2 geringer als in den übrigen Bereichen. Die Stützluft StL wird zugeleitet als konstante Dauerluft DL durch Einstellen von Druck und Menge. Zusätzlich wird der konstanten Dauerluft eine zeitlich einstellbare und/oder geregelte Stützluft GL überlagert. Die Veränderung erfolgt mittels Ventilvorrichtungen VV1 und VV2. Die Dauer der geregelten Stützluft wird elektrisch über Leitung EL bestimmt.

Bei geschlossenem Vorformling kann eine Konstanthaltung des Punktes KP1 und des Abstandes $y_{2soll} - y_{1soll}$ wie folgt erreicht werden :

Durch die beschriebene Lagensteuerung wird der Punkt KP1 zur Blasform konstant gehalten. Ferner wird über die Stützluftmenge und/oder den Stützluftdruck der Abstand $y_{2soll} - y_{1soll}$ konstant geregelt.

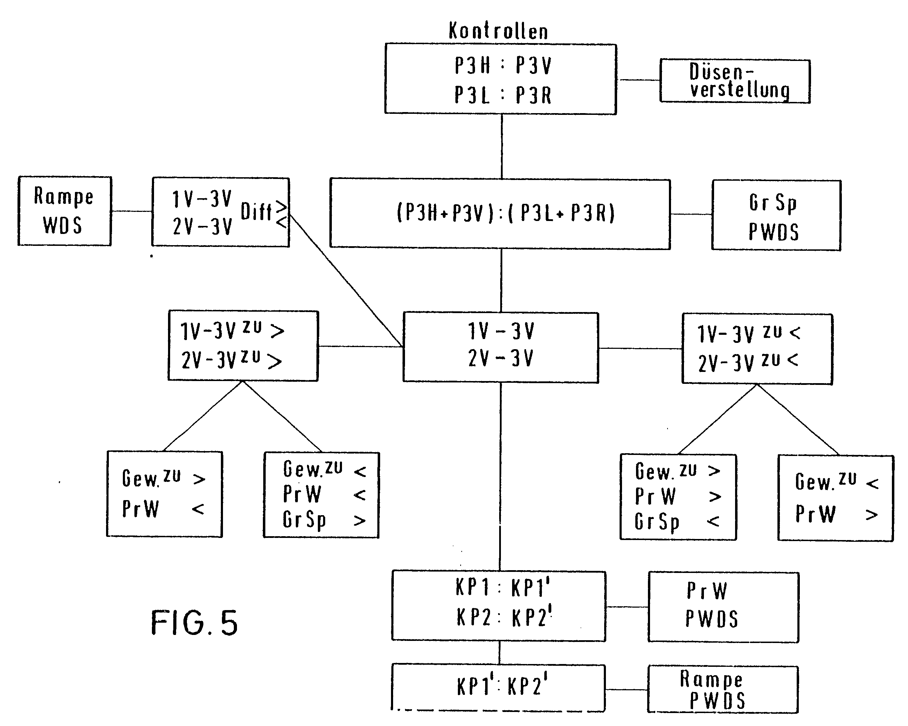

Wenn durch eine Wanddickenkontrolle festgestellt wird, daß die Wanddicke nicht mehr in der Toleranz liegt, können die möglichen Maßnahmen nach dem Schema gemäß Fig. 5 durchgeführt werden.

Bei der Vorformlings-Herstellung mit Speicherkopf wird das Bruttogewicht über den einstellbaren Speicherhub und die Schlauchlänge über den Düsenspalt konstant gehalten. Der Vorformling, abgekürzt VFL, wird hierbei nicht mit einem Messer abgeschnitten, sondern bei der Hohlkörperentnahme unter dem Kopf abgerissen. Dazu wird teilweise während der Befüllung des Speichers die Düse fest verschlossen. Diese Maßnahme wird in der Fachsprache als Düsenverschluß bezeichnet. Der Düsenverschluß soll auch ein Austreten des Vorformlings während der Befüllungszeit verhindern, was man in der Fachsprache Vorextrusion nennt. Auch hier kann wieder über die beschriebene Lagensteuerung z. B. der Punkt KP1 konstant gehalten werden.

In einigen Fällen kann es durch das Abreißen zu einer nicht gleichmäßigen Vorformlingsunterkante kommen und zusätzlich müssen einige Vorformlinge mit Vorextrusion ausgestoßen werden. Das Wanddickenprogramm läuft jedoch erst mit Ausstoßbeginn ab. Die Vorformlingslänge infolge der Vorextrusion müßte also zu den einzelnen Wanddickenpunkten hinzu addiert werden. Um die dadurch entstehenden Meßfehler auszuschalten, könnte die Ermittlung der effektiven Wanddickenlage z. B. wie folgt auch optisch durchgeführt werden. Vorzugsweise wieder an den kritischen Punkten KP1 und KP2 wird am Vorformling eine sichtbare oder auch für den Menschen unsichtbare Markierung vorgesehen, die z. B. schon in der Blasform oder einer Maske mittels Meßgeber die effektive Lage dieser markierten Punkte zur Blasform erfaßt bzw. kontrolliert.

Auf die Fig. 2 und den Punkt KP1 bezogen, würde eine Markierung an dem Vorformling unterhalb der Düse exakt beim Wanddickenpunkt 18 angebracht. Ein Meßgeber, der mit dem Abstand $y_{1soll} - y_{BF5}$ unterhalb der Düse angeordnet ist, kann unverzüglich die Blasformbewegung einleiten und damit den Punkt KP1 exakt in die gewünschte Lage bringen. Im übrigen können alle anderen beschriebenen Maßnahmen wahlweise entsprechend angewendet werden, z. B. für den Punkt KP2.

Ebenso ist es möglich, an einer Stelle des Hohlkörpers, vorzugsweise an einem Punkt, der auf einer kurzen Länge in der Vorformlingsachse einen großen Wanddickenunterschied aufweist, eine Wanddickenkontrollmessung vorzunehmen. Wird z. B. mit einem Ultraschall-Wanddicken-Meßgerät in diesen Bereich durch eine Bewegung in Längsrichtung die effektive Lage ermittelt, kann nach Erfassen des Fehlers die beschriebene Lagesteuerung diesen Punkt konstant halten. Vorteilhafterweise kann natürlich diese Messung schon in der Maske oder in der Blasform erfolgen.

Würde diese Messung in der Blasform durchgeführt, wo eine Bewegung des Meßgebers mit erheblichem Aufwand verbunden wäre, könnten je ein zusätzlicher Meßgeber in der Vorformlingsachse vor und hinter dem gewählten Kontrollpunkt die Verschiebung dieses Punktes ermitteln, weil an diesen Punkten eine unterschiedliche Sollwanddicke vorhanden ist. In diesem Fall muß eine Umrechnung der ermittelten Differenz, z. B. in Millimeter gemessen, im Wanddickenprogramm vorgenommen werden, um die vorzugsweise beschriebene Lagesteuerung über das Wanddickenprogramm einsetzen zu können. Der Nachteil einer Wanddickenkontrolle am Hohlkörper ist, daß nicht der laufende Vorformling, sondern erst der zweite oder dritte oder einer der nachfolgenden Vorformlinge beeinflußt werden kann. Um diesen Nachteil zu beseitigen und um den Forderungen der Praxis gerecht zu werden, werden folgende Schaltungen vorgesehen : Schalten für Optimieren und Anfahren, nachfolgend als Anfahrphase bezeichnet und Schalten für Chargenwechsel und normale Produktion, nachfolgend als Produktion bezeichnet.

Beim Optimieren und Anfahren, also bei der Anfahrphase, kommen große Störungen in schneller Folge vor. In der normalen Produktion und beim Chargenwechsel, also in der Produktion, kommen kleine Störungen nur schleichend vor. Die erforderlichen Maßnahmen zur Beseitigung von Störungen müssen entsprechend gewählt werden.

In der Anfahrphase sind viel größere Korrekturschritte als in der Produktion sinnvoll. Nach dem Stand der Technik ist es aus der DE-OS 2 940 904 bekannt, einen erkannten Fehler bis z. B. ± 5 % proportional auszuregeln. Fehler unter ± 1 % und über ± 15 % bleiben unberücksichtigt.

Die Erfindung geht von der Erkenntis aus, daß ein erkannter Fehler kein Fehler aufgrund einer auszuregelnden Störgröße sein muß, sondern Meßfehler sein kann. Es wird in der Regelung unterschieden, ob eine Anfahrphase oder eine Produktion vorliegt. In der Anfahrphase sollten die erkannten Fehler als richtige Fehler angesehen und mindestens proportional, besser überproportional, also bei den Korrekturschritten mit erheblich größeren Korrekturen, z. B. quadratisch, ausgeregelt werden.

In der Produktion wird das Ausregeln eines Fehlers erst freigegeben, wenn aufgrund der Kontrollmessungen ein richtiger Fehler erkannt ist. Das Optimieren und Anfahren erfolgt über die Lagensteuerung, und zwar mit Hilfe der Fotozellen $FZ_{KP1}$ und $FZ_{KP2}$. Für die normale Produktion wird eine Maßnahme gewählt, bei der der Meßfehler auf ein Minimum reduziert ist. Ein weiterer Vorteil der Erfindung ist dadurch gegeben, daß die Umschaltung von Anfahrphase auf Produktion automatisch erfolgen kann.

Nach der Erfindung ist es auch möglich, z. B. die Schlauchlänge oder den Speicherhub in eine Anzahl Abschnitte, entsprechend der Anzahl der KP-Punkte + 1, aufzuteilen. Gemäß Fig. 1 ergeben sich die folgenden drei Abschnitte

$$
\begin{array}{llll}
\text{WDP1} & - & \text{WDP8,5} & = 7,5 & \text{Abschnitte} \\
\text{WDP8,5} & - & \text{WDP18} & = 9,5 & \text{Abschnitte} \\
\text{WDP18} & - & \text{WDP25} & = 7 & \text{Abschnitte} \\
\hline
\text{Gesamt} & & & 24 & \text{Abschnitte}
\end{array}
$$

Aus den Verhältnissen :

$$V1 : 7,5 = V2 : 9,5 = V3 : 7 = VGesamt : 24$$

in Verbindung mit der ermittelten effektiven Lage von z. B. den Punkten KP1 und KP2 könnte ein Rechner durch gezielte Volumenanteilsänderungen die Abstände y2-y1 und $y_{1soll}$ auf die geforderten Abstände regeln. Es sei hier nochmals erwähnt, daß die mechanischen Werte erheblich stärker durch eine nicht genaue Lage der KP-Punkte als durch das Gewicht beeinflußt werden. Je genauer die Lage geregelt und/oder gesteuert wird, desto extremer kann das Wanddickenprogramm eingestellt und damit Material gespart werden. Um bei erforderlichen Änderungen für die Lage der KP-Punkte möglichst wenig Einfluß auf die effektiven Wanddickenpunkte im Hohlkörper zu haben, können sogenannte extreme Wanddickenpunkt-Änderungen im Butzen z. B. bei den Wanddickenpunkten 1, 2, 24 und 25 vorgenommen werden.

## Patentansprüche

1. Verfahren zum Regeln der Wanddicke von hohlstrangförmigen Vorformlingen aus thermoplastischem Kunststoff nach einen vorgegebenen Programm, wobei die Lage der Vorformling zu der Blasform durch einen Meßgeber, vorzugsweise eine Photozelle, kontrolliert wird, und wobei anschließend die Vorformlinge in einer Blasform durch Innendruck zu jeweils einem Hohlkörper aufgeweitet werden, dadurch gekennzeichnet, daß mindestens ein vorbestimmter Querschnittsbereich, vorzugsweise ein kritischer Bereich, des jeweiligen Vorformlings mit einer oder mehreren Markierungen versehen und/oder die Wanddicke dieses Querschnittsbereichs gemessen wird, und daß die Lage des Vorformlings zu der Blasform in Abhängigkeit von der Messung der Markierungen durch den Meßgeber oder durch die Wanddickenmessung ohne Rücksicht auf die Gesamtlänge des Vorformlings so geregelt wird, daß der genannte Querschnittsbereich nach dem Aufweiten an die richtige Stelle der Blasform gelangt.

2. Verfahren nach Anspruch 1, dadurch gekennzeichnet, daß mittels des Meßgebers die Lage des vorbestimmten Querschnittsbereichs (KP1', KP2') am Hohlkörper mit dem vorgegebenen Programm in einem Wanddickenprogrammierer verglichen und der noch auszustoßende Anteil des Vorformlings so bemessen bzw. verändert wird, daß der Querschnittsbereich in die richtige Lage zur Blasform gelangt.

3. Verfahren nach Anspruch 1 oder 2, dadurch gekennzeichnet, daß bei Aufteilung des Wanddickenprogramms in Abschnitte ein oder mehrere Abschnitte geregelt werden.

4. Verfahren nach Anspruch 3, dadurch gekennzeichnet, daß die Regelung eines oder mehrerer Abschnitte durch Volumenanteilsänderungen erfolgt.

5. Verfahren nach einem der Ansprüche 1 bis 4, dadurch gekennzeichnet, daß der noch auszustoßende Anteil ($Y_{1soll}$) des Vorformlings bei jedem Vorformling konstant gehalten wird.

6. Verfahren nach einem der vorhergehenden Ansprüche, dadurch gekennzeichnet, daß zwei oder mehrere kritische Bereiche (KP1', KP2') nach dem Programm ausgewählt und deren Lage mittels einer entsprechenden Anzahl von Meßgebern, vorzugsweise Fotozellen (FZKP1, FZKP2), kontrolliert und/oder geregelt werden.

7. Verfahren nach einem der vorhergehenden Ansprüche, dadurch gekennzeichnet, daß die Abstände (Y1 und Y2-Y1) auf konstante Längen geregelt werden.

8. Verfahren nach einem der vorhergehenden Ansprüche, dadurch gekennzeichnet, daß der Abstand (Y2-Y1) aus einer Relativmessung zwischen den Fotozellen (FZKP1 und FZKP2) ermittelt wird und mittels Stützluftdruck und/oder -menge oder Schneckendrehzahl geregelt wird.

9. Verfahren nach einem der vorhergehenden Ansprüche, dadurch gekennzeichnet, daß die Fotozellen (FZKP1, FZKP2) nur eine Kontrollfunktion haben und die Konstanthaltung des Abstandes (Y2-Y1) über eine weitere Fotozelle (FZBFB) geregelt wird.

10. Verfahren nach einem der vorhergehenden Ansprüche, dadurch gekennzeichnet, daß bei geschlossenem Vorformling (VFL) die Parameter, wie Stützluftmenge und/oder Stützluftdruck (DL) und/oder bei der gesteuerten Stützluft (GL) die Einwirkzeit, geregelt und/oder gesteuert werden.

11. Verfahren nach Anspruch 10, dadurch gekennzeichnet, daß die Parameter so gewählt werden, daß die veränderte Stützluft keine oder nur geringe Veränderungen in den Quetschnähten des Hohlkörpers zur Folge hat.

12. Verfahren nach einem der vorhergehenden Ansprüche, dadurch gekennzeichnet, daß die Wanddicke der kritischen Punkte (KP1', KP2') erhalten bleibt und die Volumenanteilsänderung durch Änderung eines oder mehrerer Wanddickenpunkte erfolgt.

13. Verfahren nach einem der vorhergehenden Ansprüche, dadurch gekennzeichnet, daß dem Vorformling ein Wanddickenprogrammstück (YPrSt) vorgeschaltet wird.

14. Verfahren nach einem der vorhergehenden Ansprüche, dadurch gekennzeichnet, daß die Wanddickenänderung nach einer oder mehreren Funktionen erfolgt.

15. Verfahren nach einem der vorhergehenden Ansprüche, dadurch gekennzeichnet, daß die Markierungen an den kritischen Punkten (KP1', KP2') angebracht werden.

16. Verfahren nach einem der vorhergehenden Ansprüche, dadurch gekennzeichnet, daß bei Erfassung einer bestimmten Markierung die Übernahme des Vorformlings von der Blasform direkt oder verzögert eingeleitet wird.

17. Verfahren nach einem der vorhergehenden Ansprüche, dadurch gekennzeichnet, daß die Wanddicke der fertigen Hohlkörper an einer oder mehreren Stellen gemessen wird und zur Regelung der nachfolgenden Vorformlinge verwendet wird.

18. Verfahren nach einem der vorhergehenden Ansprüche, dadurch gekennzeichnet, daß die Messung schon in der Blasform oder in einer Maske erfolgt.

19. Verfahren nach einem der vorhergehenden Ansprüche, dadurch gekennzeichnet, daß zur Erfassung der Wanddicke am Kontrollpunkt je ein Meßgeber zur Messung der Wanddicke mit Abstand vor und nach dem Kontrollpunkt angebracht wird.

20. Verfahren nach Ansprunch 19, dadurch gekennzeichnet, daß als Kontrollpunkt ein Punkt im Hohlkörper gewählt wird, der mit einer kurzen Länge in der Vorformlingsachse einen großen Wanddicke-unterschied aufweist.

21. Verfahren nach einem der vorhergehenden Ansprüche, dadurch gekennzeichnet, daß mehrere Kontrollpunkte oder Markierungen (KP1, KP2) aufgebracht werden und deren Lage im fertigen Hohlkörper optisch erfaßt wird und zur Lagensteuerung und/oder Abstandsregelung verwendet wird.

22. Verfahren nach einem der vorhergehenden Ansprüche, dadurch gekennzeichnet, daß der Wanddickenprogrammierer mit einem Interpolator vorgesehen ist, welcher wahlweise ausgeschaltet werden kann, so daß die Sprünge der Programmkurve und dadurch die momentane Lage einiger oder aller Wanddickenpunkte einschließlich ihrer Recklinien im Hohlkörper sichtbar werden.

23. Verfahren nach einem der vorhergehenden Ansprüche, dadurch gekennzeichnet, daß durch Messung der Wanddicke festgestellt wird, welche Regelgröße wirksam werden muß.

24. Verfahren nach einem der vorhergehenden Ansprüche, dadurch gekennzeichnet, daß den Regelmöglichkeiten eindeutige Regelgrößen zugeordnet werden, so daß die Kontanthaltung der gewünschten Größen gewährleistet ist.

25. Verfahren nach einem der vorhergehenden Ansprüche, dadurch gekennzeichnet, daß die Abweichung zwischen einem oder mehreren Meßwerten von Meßgebern und den entsprechenden Programmpunkten oder Markierungen schon für die laufende Vorformlingsbildung berücksichtigt wird.

26. Verfahren nach einem der vorhergehenden Ansprüche, dadurch gekennzeichnet, daß zur laufenden Geschwindigkeits-Regelung mehrere Meßgeber so vorgesehen sind, daß diese immer den Vergleich mit einem vollen Wanddickenpunkt ermöglichen.

27. Verfahren nach einem der vorhergehenden Ansprüche, dadurch gekennzeichnet, daß bei Abweichungen sofort entsprechende Maßnahmen eingeleitet werden.

28. Verfahren nach einem der vorhergehenden Ansprüche, dadurch gekennzeichnet, daß die Kontrollwerte entsprechend den Vorformlingslängen gespeichert und zu einer Programmänderung verwendet werden.

29. Verfahren nach einem der vorhergehenden Ansprüche, dadurch gekennzeichnet, daß die Kontrolle und/oder Regelung so vorgenommen wird, daß der kritischste Bereich Vorrang hat.

30. Verfahren nach einem der vorhergehenden Ansprüche, dadurch gekennzeichnet, daß der noch auszustoßende Anteil aus einem oder mehreren der vorhergehenden Zyklen ermittelt wird.

31. Verfahren nach einem der vorhergehenden Ansprüche, dadurch gekennzeichnet, daß die Korrekturschritte in der Anfahr- und Optimierungsphase mindestens proportional zum erkannten Fehler vorgenommen werden.

32. Verfahren nach Ansprunch 31, dadurch gekennzeichnet, daß Korrekturschritte überproportional, z. B. quadratisch, vorgenommen werden.

33. Verfahren nach einem der vorhergehenden Ansprüche, dadurch gekennzeichnet, daß die Korrekturschrittgröße in der Produktion aus der Tendenz einer bestimmten Anzahl von vorausgegangenen Messungen abgeleitet wird.

34. Verfahren nach Ansprunch 33, dadurch gekennzeichnet, daß eine Steuerung und/oder Regelung so lange außer Kraft bleibt, wie aus einer bestimmten Anzahl von vorangegangenen Messungen die Summe der Abweichungen über und unter dem Sollwert gleich sind.

35. Verfahren nach Ansprunch 33 oder 34, dadurch gekennzeichnet, daß die Steuerung und/oder Regelung in der Produktion wieder einsetzt, wenn sich aus den Kontrollmessungen eine fallende oder steigende Tendenz eines Unterschiedes gegenüber dem eigegebenen Sollwert ergibt.

36. Verfahren nach Ansprunch 31 und einem der nachfolgenden Ansprüche, dadurch gekennzeichnet, daß eine automatische Umschaltung von der Anfahrphase auf die Produktion nach Erreichen vorher festgelegter Kriterien erfolgt.

37. Verfahren nach Anspruch 36, dadurch gekennzeichnet, daß die Umschaltung nach einer einstellbaren Zeit erfolgt.

**Claims**

1. Method for regulating the wall thickness of extruded hollow preforms consisting of thermoplastic synthetic material according to a predetermined program, the position of the preform with respect to the blow mould being controlled by a sensor, preferably a photoelectric cell and then the preforms being enlarged respectively to form a hollow member in a blow mould by internal pressure, characterised in that at least one predetermined cross-sectional region, preferably a critical region, of the respective preform is provided with one or more markings and/or the wall thickness of this cross-sectional region is measured and that the position of the preform with respect to the blow mould is regulated depending on the measurement of the markings by the sensor or by the wall thickness measurement without reference to the total length of the preform so that after enlargement, the said cross-sectional region arrives at the correct point of the blow mould.

2. Method according to Claim 1, characterised in that by means of the sensor, the position of the predetermined cross-sectional region (KP1', KP2') on the hollow member is compared with the given program in a wall thickness programmer and the portion of the preform still to be ejected is measured or varied so that the cross-sectional region arrives in the correct position with respect to the blow mould.

3. Method according to Claim 1 or 2, characterised in that when dividing the wall thickness program into sections, one or more sections are regulated.

4. Method according to Claim 3, characterised in that the regulation of one or more sections takes place by variations in the volumetric portion.

5. Method according to one of Claims 1 to 4, characterised in that in the case of each preform, the portion (Y1 ref) of the preform still to be ejected is kept constant.

6. Method according to one of the preceding Claims, characterised in that two or more critical regions (KP1', KP2') are selected according to the program and their positions are monitored and/or regulated by means of a corresponding number of sensors, preferably photoelectric cells (FZKP1, FZKP2).

7. Method according to one of the preceding Claims, characterised in that the distances (Y1 and Y2-Y1) are kept at constant lengths.

8. Method according to one of the preceding Claims, characterised in that the distance (Y2-Y1) is ascertained from a relative measurement between the photoelectric cells (FZKP1 and FZKP2) and regulated by means of supporting air pressure and/or quantity or worm speed.

9. Method according to one of the preceding Claims, characterised in that the photoelectric cells (FZKP1, FZKP2) have solely a monitoring function and keeping the distance (Y2-Y1) constant is regulated by way of a further photoelectric cell (FZBFB).

10. Method according to one of the preceding Claims, characterised in that when the preform (VFL) is closed, the parameters, such as quantity of supporting air and/or pressure of supporting air (DL) and/or when the supporting air (GL) is controlled, the reaction time, are regulated and/or controlled.

11. Method according to Claim 10, characterised in that the parameters are chosen so that the varied supporting air does not produce any or only slight variations in the compression seams of the hollow member.

12. Method according to one of the preceding Claims, characterised in that the wall thickness of the critical points (KP1', KP2') is preserved and the variation in the volumetric portion takes place by varying one or more wall thickness points.

13. Method according to one of the preceding Claims, characterised in that the preform is preceded by a wall thickness program part (YPrSt).

14. Method according to one of the preceding Claims, characterised in that the variation in the wall thickness takes place according to one or more functions.

15. Method according to one of the preceding Claims, characterised in that the markings are located at the critical points (KP1', KP2').

16. Method according to one of the preceding Claims, characterised in that when ascertaining a certain marking, the transfer of the preform from the blow mould is introduced directly or in a delayed manner.

17. Method according to one of the preceding Claims, characterised in that the wall thickness of the finished hollow member is measured at one or mor points and is used for regulating the following preforms.

18. Method according to one of the preceding Claims, characterised in that the measurement already takes place in the blowing mould or in a shell.

19. Method according to one of the preceding Claims, characterised in that for ascertaining the wall thickness at the monitoring point, a sensor for measuring the wall thickness is respectively located at a distance in front and after the monitoring point.

20. Method according to Claim 19, characterised in that as the monitoring point a point in the hollow member is selected, which has a large wall thickness difference over a short length of the preform axis.

21. Method according to one of the preceding Claims, characterised in that several monitoring points or markings (KP1, KP2) are applied and their position in the finished hollow member is monitored optically and used for controlling positions and/or regulating distances.

22. Method according to one of the preceding Claims, characterised in that the wall thickness programmer is provided with an interpolator, which can be switched off optionally, so that the jumps in the program curve and due to this the momentary position of some or all wall thickness points including their elongation lines in the hollow member are visible.

23. Method according to one of the preceding Claims, characterised in that by measuring the wall thickness it is ascertained which controlled variable must become effective.

24. Method according to one of the preceding Claims, characterised in that well-defined controlled variables are associated with the regulation possibilities, so that maintenance of the desired variables is ensured.

25. Method according to one of the preceding Claims, characterised in that the deviation between one or more measured values is taken into consideration by sensors and the corresponding program points or markings already for the formation of the current preform.

26. Method according to one of the preceding Claims, characterised in that several sensors are provided for the current speed regulation so that the latter still facilitate the comparison with a complete wall thickness point.

27. Method according to one of the preceding Claims, characterized in that in the case of deviations, corresponding measures are initiated immediately.

28. Method according to one of the preceding Claims, characterised in that the monitored values corresponding to the preform lengths are memorized and used for varying the program.

29. Method according to one of the preceding Claims, characterised in that monitoring and/or regulation is undertaken so that the critical region has priority.

30. Method according to one of the preceding Claims, characterised in that the portion still to be ejected is ascertained from one or more of the preceding cycles.

31. Method according to one of the preceding Claims, characterised in that the correction steps in the starting-up and optimization stages are carried out at least in proportion to the errors recognised.

32. Method according to Claim 31, characterised in that the correction steps are carried out in excess of proportionately, for example quadratically.

33. Method according to one of the preceding Claims, characterised in that the correction step value in the production is derived from the tendency of a certain number of preceding measurements.

34. Method according to Claim 33, characterised in that a control and/or regulation remains out of force as long as from a certain number of preceding measurements, the sums of the deviations above and below the reference value are the same.

35. Method according to Claim 33 or 34, characterised in that the control and/or regulation in the production is introduced again if a falling or increasing tendency of a difference with respect to the reference value fed in results from the control measurements.

36. Method according to Claim 31 and one of the following Claims, characterised in that an automatic change-over from the starting-up stage to production takes place after achieving previously fixed criteria.

37. Method according to Claim 36, characterised in that the change-over takes place after an adjustable time.

## Revendications

1. Procédé pour régler l'épaisseur de paroi de préforme en matière thermoplastique et en forme de tiges creuses selon un programme prédéterminé, où la position des préformes par rapport au moule de soufflage est contrôlée par un capteur de mesure, de préférence une cellule photoélectrique, et où ensuite les préformes sont expansées dans un moule de soufflage par une pression interne chacune sous la forme d'un corps creux, caractérisé en ce qu'au moins une zone prédéterminée de section, de préférence une zone critique, de la préforme correspondante est pourvue d'un ou plusieurs repères et/ou l'épaisseur de paroi de cette zone de section est mesurée et en ce que la position de la préforme par rapport au moule est réglée en fonction de la mesure des repères par le capteur de mesure ou par la mesure d'épaisseur de paroi sans tenir compte de la longueur totale de la préforme de telle sorte que la zone de section précitée parvienne après l'expansion dans la position correcte dans le moule de soufflage.

2. Procédé selon la revendication 1, caractérisé en ce qu'au moyen du capteur de mesure, la position de la zone de section prédéterminée (KP1', KP2') dans le corps creux est comparée avec le programme prédéterminé dans un programmateur d'épaisseur de paroi et la partie de la préforme encore à extraire est dimensionnée ou modifiée de telle sorte que la zone de section parvienne dans la position correcte par rapport au moule de soufflage.

3. Procédé selon la revendication 1 ou 2, caractérisé en ce que lors d'une division du programme d'épaisseur de paroi en segments, un ou plusieurs segments sont réglés.

4. Procédé selon la revendication 3, caractérisé en ce que la régulation d'un ou plusieurs segments est effectuée par des variations de parties de volume.

5. Procédé selon une des revendications 1 à 4, caractérisé en ce que la partie de préforme encore à extraire (Y1 SO 11) est maintenue constante pour chaque préforme.

6. Procédé selon une des revendications précédentes, caractérisé en ce que deux ou plus de deux zones critiques (KP1', KP2') sont choisies d'après le programme et leurs positions sont contrôlées et/ou réglées au moyen d'un nombre correspondant de capteurs de mesure, de préférence des cellules photoélectriques (FZKP1, FZKP2).

7. Procédé selon l'une des revendications précédentes, caractérisé en ce que les espacements (Y1 et Y2-Y1) sont réglés à des longueurs constantes.

8. Procédé selon l'une des revendications précédentes, caractérisé en ce que l'espacement (Y2-Y1) est obtenu à partir d'une mesure relative entre les cellules photoélectriques (FZKP1 et FZKP2) et est réglé au moyen d'une pression et/ou d'une quantité d'air de soutien ou bien de la vitesse de rotation de la vis sans fin.

9. Procédé selon l'une des revendications précédentes, caractérisé en ce que les cellules photoélectriques (FZKP1, FZKP2) ont seulement une jonction de contrôle et le maintien de la constance de l'espacement (Y2-Y1) est réglé par une autre cellule photoélectrique (FZBFB).

10. Procédé selon l'une des revendications précédentes, caractérisé en ce que, pour une préforme fermée (VFL), les paramètres, comme la quantité d'air de soutien et/ou la pression (DL) d'air de soutien et/ou, dans le cas de commande de l'air de soutien (GL), le temps d'action, sont réglés et/ou commandés.

11. Procédé selon la revendication 10, caractérisé en ce que les paramètres sont choisis de telle sorte que l'air de soutien modifié n'ait pour conséquence aucune ou seulement de petites variations dans les joints en écrasement du corps creux.

12. Procédé selon l'une des revendications précédentes, caractérisé en ce que l'épaisseur de paroi des points critiques (KP1', KP2') reste maintenue et la variation de partie de volume est effectuée par variation d'un ou plusieurs points d'épaisseur de paroi.

13. Procédé selon l'une des revendications précédentes, caractérisé en ce qu'une partie du programme d'épaisseur de paroi est introduite avant la préforme.

14. Procédé selon l'une des revendications précédentes, caractérisé en ce que la variation d'épaisseur de paroi est effectuée selon une ou plusieurs fonctions.

15. Procédé selon l'une des revendications précédentes, caractérisé en ce que les repères sont placés aux points critiques (KP1', KP2').

16. Procédé selon l'une des revendications précédentes, caractérisé en ce que, lors de la détection d'un repère déterminé, le transfert de la préforme est enclenché de façon directe ou retardée par le moule de soufflage.

17. Procédé selon l'une des revendications précédentes, caractérisé en ce que l'épaisseur de paroi du corps creux final est mesurée en un ou plusieurs endroits et est utilisée pour une régulation des préformes suivantes.

18. Procédé selon l'une des revendications précédentes, caractérisé en ce que la mesure est déjà effectuée dans le moule de soufflage ou dans un masque.

19. Procédé selon l'une des revendications précédentes, caractérisé en ce que, pour la détection de l'épaisseur de paroi en un point de contrôle, il est prévu un capteur de mesure respectif pour effectuer une mesure d'épaisseur de paroi avant et après le point de contrôle.

20. Procédé selon la revendication 19, caractérisé en ce que, comme point de contrôle, il est choisi dans le corps creux un point qui présente une grande différence d'épaisseur de paroi pour une courte longueur sur l'axe de la préforme.

21. Procédé selon l'une des revendications précédentes, caractérisé en ce que plusieurs points de contrôle ou repère (KP1, KP2) sont formés et leur position dans le corps creux final est détectée optiquement et est utilisée pour une commande de position et/ou une régulation d'espacement.

22. Procédé selon l'une des revendications précédentes, caractérisé en ce que le programmateur d'épaisseur de paroi est pourvu d'un interpolateur, qui peut être désactivé sélectivement de telle sorte que les décrochages de la courbe de programme, et par conséquent les positions instantanées de quelques ou tous les points d'épaisseur de paroi, y compris leurs lignes de progression dans le creux, soient visibles.

23. Procédé selon l'une des revendications précédentes, caractérisé en ce que, par une mesure de l'épaisseur de paroi, on détermine quel paramètre de réglage doit intervenir.

24. Procédé selon l'une des revendications précédentes, caractérisé en ce qu'aux possibilités de régulation sont associés des paramètres de réglage définis de telle sorte que le maintien de la constance des paramètres désirés soit garanti.

25. Procédé selon l'une des revendications précédentes, caractérisé en ce que l'écart entre une ou plusieurs valeurs de mesures des capteurs de mesures et les points de programme ou les repères correspondants est déjà pris en considération pour la formation de préforme en cours.

26. Procédé selon l'une des revendications précédentes, caractérisé en ce que, pour une régulation continue de vitesse, il est prévu plusieurs capteurs de telle sorte que ceux-ci permettent toujours la comparaison avec un point d'épaisseur de paroi approprié.

27. Procédé selon l'une des revendications précédentes, caractérisé en ce que, en cas d'écart, immédiatement des mesures correspondantes sont prises.

28. Procédé selon l'une des revendications précédentes, caractérisé en ce que les valeurs de contrôle sont mémorisées en correspondance avec les longueurs de préformes et sont utilisées pour une modification du programme.

29. Procédé selon l'une des revendications précédentes, caractérisé en ce que le contrôle et/ou la régulation sont effectués de telle sorte que la zone critique ait la priorité.

30. Procédé selon l'une des revendications précédentes, caractérisé en ce que la partie encore à extraire est déterminée à partir d'un ou plusieurs des cycles précédents.

31. Procédé selon l'une des revendications précédentes, caractéris en ce que les échelons de correction dans la phase de démarrage et d'optimisation sont effectués au moins proportionnnellement aux erreurs détectées.

32. Procédé selon la revendication 31, caractérisé en ce que les échelons de correction sont effectués de façon supra-proportionnelle, par exemple quadratique.

33. Procédé selon l'une des revendications précédentes, caractérisé en ce que la grandeur d'échelon de correction est déduite, en cours de production, de la tendance d'un nombre déterminé de mesures précédentes.

34. Procédé selon la revendication 33, caractérisé en ce qu'une commande et/ou une régulation reste sans effet aussi longtemps que, pour un nombre déterminé de mesures précédentes, la somme des écarts est supérieure et inférieure à la valeur de consigne.

35. Procédé selon la revendication 33 ou 34, caractérisé en ce que la commande et/ou la régulation sont rétablies en cours de production lorsque, à partir des mesures de contrôle, il se manifeste une tendance croissante ou décroissante à une différence par rapport à la valeur de consigne introduite.

36. Procédé selon la revendication 31 et une des revendications suivantes, caractérisé en ce qu'une commutation automatique de la phase de démarrage à la production est effectuée après que des critères établis auparavant sont obtenus.

37. Procédé selon la revendication 36, caractérisé en ce que la commutation est effectuée après un temps réglable.

FIG.1

FIG.2

H

L

R

V

FIG.3

FIG.4

FIG. 5